# EUROPEAN PATENT APPLICATION

(11) **EP 4 643 991 A1**
(43) Date of publication of application: **05.11.2025**
(21) Application number: 23912236.9
(22) Date of filing: 27.12.2023
(51) Int. Cl.: B01J 29/46, B01J 23/60, B01J 29/44, C07B 61/00, C07C 1/04, C07C 9/08, C07C 9/10, C10L 3/12

(54) **LIQUID PETROLEUM GAS PRODUCTION REACTOR AND LIQUID PETROLEUM GAS PRODUCTION REACTION DEVICE**

(30) Priority: 28.12.2022 JP 2022212753
(71) Applicant: FURUKAWA ELECTRIC CO., LTD., Tokyo 100-8322 (JP)
(72) Inventor: FUJIKAWA Takashi, Tokyo 100-8322 (JP); IWANO Yuki, Tokyo 100-8322 (JP); TAKAHASHI Hiroko, Tokyo 100-8322 (JP); BAMBA Yuichiro, Tokyo 100-8322 (JP); KAWAMATA Yuki, Tokyo 100-8322 (JP); LEE Yu, Tokyo 100-8322 (JP); HIRANO Junya, Tokyo 100-8322 (JP); FUKUSHIMA Masayuki, Tokyo 100-8322 (JP)
(74) Representative: Winter, Brandl - Partnerschaft mbB
(86) International application number: PCT/JP2023/046894
(87) International publication number: WO 2024/143458

(57) **Abstract**

This liquid petroleum gas production reactor comprises a housing part accommodating a Cu-Zn-based catalyst and a zeolite catalyst supporting a noble metal, wherein the proportion (wt1/(wt1+wt2)) of the weight of the Cu-Zn-based catalyst to the total weight of the weight (wt1) of the Cu-Zn-based catalyst and the weight (wt2) of the zeolite catalyst in an upstream region of the housing part is different from the proportion (wb1/(wb1+wb2)) of the weight of the Cu-Zn-based catalyst to the total weight of the weight (wb1) of the Cu-Zn-based catalyst and the weight (wb2) of the zeolite catalyst in a downstream region of the housing part.

## Description

### TECHNICAL FIELD

The present disclosure relates to a liquefied petroleum gas production reactor and a liquefied petroleum gas production reaction device.

### BACKGROUND ART

Liquefied petroleum gas (LPG) with propane and butane as main components exists inside of oil field and natural gas field in a state in which impurity gases such as methane and ethane are mixed. After transporting such mixed gas to an above-ground facility, the propane and butane are separated and recovered from the mixed gas, and impurities such as sulfur and mercury are removed to obtain liquefied petroleum gas.

Furthermore, the liquefied petroleum gas is also contained in crude oil. For this reason, liquefied petroleum gas can also be obtained by separating and extracting the propane and butane in the refining process of an oil refinery.

Furthermore, a method of producing liquefied petroleum gas from syngas is also being researched. For example, Patent Document 1 discloses a method for producing liquefied petroleum gas including a methanol production step of producing crude methanol containing methanol, hydrogen and at least one of carbon monoxide and carbon dioxide from syngas using a methanol synthesis catalyst; and a liquefied petroleum gas production step of supplying the crude methanol obtained in the methanol production step, and producing liquefied petroleum gas having propane or butane as a main component using a liquefied petroleum gas production catalyst. In the method for producing liquefied petroleum gas described in

Patent Document 1, the methanol production process and the liquefied petroleum gas production process are linked by piping, and the crude methanol produced in the methanol production process is supplied to the liquefied petroleum gas production process through the piping.

However, in the method for producing liquefied petroleum gas described in Patent Document 1, the reaction efficiency is insufficient due to dimethyl ether (DME), which is a byproduct, being contained abundantly in the generated gas obtained in the liquefied petroleum gas production process.

### Citation List

### Patent Document

Patent Document 1: Japanese Unexamined Patent Application, Publication No. 2007-238608

### DISCLOSURE OF THE INVENTION

### Problems to be Solved by the Invention

An object of the present disclosure is to provide a liquefied petroleum gas production reactor and a liquefied petroleum gas production reaction device which can improve the CO conversion rate and yield of liquefied petroleum gas, and decrease the generated amount of dimethyl ether, which is a byproduct.

### Means for Solving the Problems

[1] A liquefied petroleum gas production reactor including a housing part that accommodates a Cu-Zn-based catalyst and a zeolite catalyst supporting a noble metal, in which a ratio (wt1/(wt1+wt2)) of a weight of the Cu-Zn-based catalyst relative to a total weight of the weight (wt1) of the Cu-Zn-based catalyst and a weight (wt2) of the zeolite catalyst in an upstream region of the housing part differs from a ratio (wb1/(wb1+wb2)) of a weight of the Cu-Zn-based catalyst relative to a total weight of the weight (wb1) of the Cu-Zn-based catalyst and a weight (wb2) of the zeolite catalyst in a downstream region of the housing part.
[2] The liquefied petroleum gas production reactor as described in [1] above, in which the ratio (wt1/(wt1+wt2)) is greater than the ratio (wb1/(wb1+wb2)).
[3] The liquefied petroleum gas production reactor as described in [1] or [2] above, in which the ratio (wt1/(wt1+wt2)) is 0.30 or more.
[4] The liquefied petroleum gas production reactor as described in [1] or [2] above, in which the ratio (wb1/(wb1+wb2)) is less than 0.70.
[5] The liquefied petroleum gas production reactor as described in any one of [1] to [4] above, in which a total filling rate of the Cu-Zn-based catalyst and the zeolite catalyst accommodated in the housing part is 20% by mass or more.
[6] The liquefied petroleum gas production reactor as described in any one of [1] to [5] above, in which the zeolite catalyst contains P.
[7] A liquefied petroleum gas production reaction device including the liquefied petroleum gas production reactor as described in any one of [1] to [6] above.

### Effects of the Invention

According to the present disclosure, it is possible to provide a liquefied petroleum gas production reactor and a liquefied petroleum gas production reaction device which can improve the CO conversion rate and yield of liquefied petroleum gas, and decrease the generated amount of dimethyl ether, which is a byproduct.

### BRIEF DESCRIPTION OF THE DRAWINGS

FIG. 1 is a front view showing an example of a liquefied petroleum gas production reactor according to an embodiment.
FIG. 2 is a front view showing another example of a liquefied petroleum gas production reactor according to an embodiment.

### PREFERRED MODE FOR CARRYING OUT THE INVENTION

Hereinafter, the present invention will be described in detail based on an embodiment.

As a result of thorough investigation, the present inventors have found that it is possible to improve the CO conversion rate and yield of liquefied petroleum gas, and decrease the generated amount of dimethyl ether which is a byproduct, by accommodating, in the same housing part of a reactor, a Cu-Zn-based catalyst and a zeolite catalyst supporting a noble metal for producing liquefied petroleum gas, and setting a weight ratio of the Cu-Zn-based catalyst and the zeolite catalyst supporting a noble metal in a predetermined region within the housing part to a predetermined range, and based on such knowledge, arrived a completion of the present disclosure.

A liquefied petroleum gas production reactor according to the embodiment includes a housing part that accommodates a Cu-Zn-based catalyst and a zeolite catalyst supporting a noble metal, in which a ratio (wt1/(wt1+wt2)) of a weight of the Cu-Zn-based catalyst relative to a total weight of the weight (wt1) of the Cu-Zn-based catalyst and a weight (wt2) of the zeolite catalyst in an upstream region of the housing part differs from a ratio (wb1/(wb1+wb2)) of a weight of the Cu-Zn-based catalyst relative to a total weight of the weight (wb1) of the Cu-Zn-based catalyst and a weight (wb2) of the zeolite catalyst in a downstream region of the housing part.

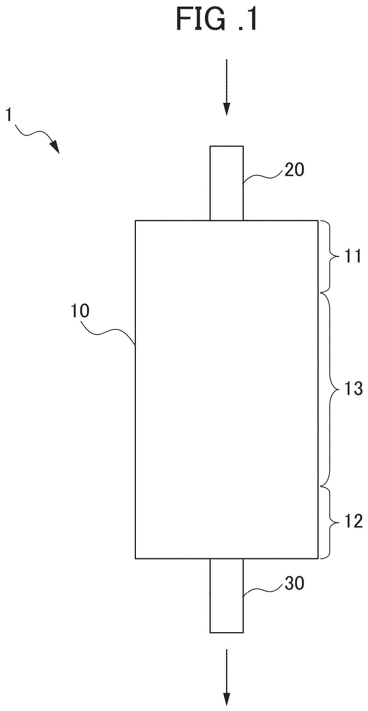

First, a liquefied petroleum gas production reactor according to the embodiment will be described. FIG. 1 is a front view showing an example of the liquefied petroleum gas production reactor according to the embodiment.

As shown in FIG. 1, the liquefied petroleum gas production reactor 1 (hereinafter also referred to simply as reactor) includes a housing part 10, a fluid flow inlet 20 and a fluid flow outlet 30.

The housing part 10 constituting the reactor 1 accommodates inside thereof a Cu-Zn-based catalyst and a zeolite catalyst supporting a noble metal (hereinafter also referred to simply as zeolite catalyst). The fluid flow inlet 20 is coupled to an upstream side of the housing part 10. The fluid flow inlet 20 communicates with an upstream region 11 in the housing part 10. The fluid which is the raw material (hereinafter referred to simply as raw material) is supplied to the upstream region 11 of the housing part 10 via the fluid flow inlet 20 from outside of the housing part 10.

The fluid flow outlet 30 is coupled to the downstream side of the housing part 10. The fluid flow outlet 30 communicates with the downstream region 12 in the housing part 10. The fluid which is the product material containing the liquefied petroleum gas (hereinafter also referred simply as product material) is flowed to outside of the housing part 10 via the fluid flow outlet 30 from the downstream region 12 of the housing part 10.

The upstream side of the housing part 10 is the upstream side in the flow channel direction of the fluid flowing through the inside of the housing part 10, and the downstream side of the housing part 10 is the downstream side in the flow channel direction of the fluid flowing through the inside of the housing part 10. In the fluid flowing through the inside of the housing part 10, the raw material supplied to the housing part 10, and liquefied petroleum gas, intermediates and byproducts generated in the reaction inside the housing part 10 are included.

The raw material supplied from the fluid flow inlet 20 to the housing part 10 is fluid containing carbon monoxide and hydrogen, e.g., is syngas. In addition, within the housing part 10, intermediates such as methanol are generated from the carbon monoxide and hydrogen by the Cu-Zn-based catalyst. Next, the product material containing liquefied petroleum gas is generated from methanol by the zeolite catalyst. Then, the product material containing liquefied petroleum gas is flowed to outside of the housing part 10 from the fluid flow outlet 30. In addition, the dimethyl ether, which is an intermediate (byproduct) in the reaction from methanol to liquefied petroleum gas by the zeolite catalyst may be contained in abundance in the product material.

When defining the ratio (wt1/(wt1+wt2)) of the weight of the Cu-Zn-based catalyst relative to the total weight of the weight (wt1) of the Cu-Zn-based catalyst and the weight (wt2) of the zeolite catalyst in the upstream region 11 of the housing part 10 as a first weight ratio, and defining the ratio (wb1/(wb1+wb2)) of the weight of the Cu-Zn-based catalyst relative to the total weight of the weight (wb1) of the Cu-Zn-based catalyst and the weight (wb2) of the zeolite catalyst in the downstream region 12 of the housing part 10 as a second weight ratio, it is preferable for the first weight ratio (wt1/(wt1+wt2)) and the second weight ratio (wb1/(wb1+wb2)) to be different, and for the first weight ratio to be larger than the second weight ratio.

When the first weight ratio and the second weight ratio are in the above-mentioned relationship, it is possible to efficiently generate methanol by the Cu-Zn-based catalyst from the carbon monoxide and hydrogen flowing into the upstream region 11, and then it is possible to generate liquefied petroleum gas immediately from the methanol generated by the Cu-Zn-based catalyst, by the zeolite catalyst present in the vicinity of the Cu-Zn-based catalyst. In addition, although dimethyl ether, which is an intermediate, is generated from methanol by the zeolite catalyst, liquefied petroleum gas is generated from the dimethyl ether by the zeolite catalyst accommodated in the downstream region 12. As a result, in addition to being able to decrease the generated amount of dimethyl ether, which is an intermediate generated by the zeolite catalyst, it is possible to improve the yield of liquefied petroleum gas. In this way, it is possible to achieve a generated amount decrease in dimethyl ether and a yield increase of the liquefied petroleum gas, while improving the CO conversion rate.

When the first weight ratio (wt1/(wt1+wt2)) is 0.30 or more, a predetermined ratio or more of Cu-Zn-based catalyst is accommodated in the upstream region 11. According to such a configuration, the carbon monoxide and hydrogen supplied from the fluid flow inlet 20 to the upstream region 11 can be efficiently converted to methanol by the Cu-Zn-based catalyst in the upstream region 11. It is possible to improve the CO conversion rate as the first weigh ratio increase.

For the above-mentioned reason, the first weight ratio (wt1/(wt1+wt2)) is preferably larger. For example, the lower limit can be set to 0.30 or more, 0.50 or more, or 0.70 or more, and the upper limit can be set to 1, 0.95 or less, or 0.90 or less.

When the second weight ratio (wb1/(wb1+wb2)) is less than 0.70, a predetermined ratio or more of the zeolite catalyst is accommodated in the downstream region 12. According to such a configuration, it is possible to efficiently convert the methanol and dimethyl ether generated in the upstream region 11 and flowing to the downstream region 12 into liquefied petroleum gas by the zeolite catalyst in the downstream region 12. With a smaller second weight ratio, it is possible to increase the yield of liquefied petroleum gas and decrease the generated amount of dimethyl ether.

For the above-mentioned reason, the second weight ratio (wb1/(wb1+wb2)) is preferably less than 0.70, more preferably less than 0.50, even more preferably less than 0.30, particularly preferably less than 0.05, and most preferably 0, i.e. is a state in which only the zeolite catalyst is accommodated in the downstream region 12.

In addition, from the viewpoint of improving the CO conversion rate and the yield of liquefied petroleum gas, and decreasing the generated amount of dimethyl ether, regarding the accommodated state of the Cu-Zn-based catalyst and the zeolite catalyst inside of the housing part 10, it is preferable for a plurality of Cu-Zn-based catalysts, a plurality of zeolite catalysts, as well as the Cu-Zn-based catalyst and the zeolite catalyst being in contact with each other, and these catalysts are more preferably accommodated in the closest packed state within the housing part 10. For example, the total filling rate of the Cu-Zn-based catalyst and the zeolite catalyst accommodated in the housing part 10 is preferably 20% by mass or more, more preferably 50% by mass or more, and even more preferably 90% by mass or more. When the total filling rate of the Cu-Zn-based catalyst and the zeolite catalyst inside of the housing part 10 is 20% by mass or more, it is possible to further improve the above-mentioned effects.

In addition, from the viewpoint of improving the CO conversion rate and the yield of liquefied petroleum gas, and decreasing the generated amount of dimethyl ether, regarding the accommodated state of the Cu-Zn-based catalyst and the zeolite catalyst inside of the housing part 10, particularly in the upstream region 11 and the downstream region 12, it is preferable for a plurality of Cu-Zn-based catalysts, a plurality of zeolite catalysts, as well as the Cu-Zn-based catalyst and the zeolite catalyst being in contact with each other. In addition, in the upstream region 11 and the downstream region 12, although it is preferable for a plurality of Cu-Zn-based catalyst, a plurality of zeolite catalysts, as well as the Cu-Zn-based catalyst and the zeolite catalyst to be accommodated in a uniformly mixed state, from the viewpoint of manufacturing, part thereof may be a non-uniformly mixed state. In addition, in order to adjust the composition of the product material including the liquefied petroleum gas, it is also possible to non-uniformly adjust the accommodated state of the Cu-Zn-based catalyst and the zeolite catalyst in the upstream region 11 and the downstream region 12 within a range not departing from the present invention.

The plurality of Cu-Zn-based catalysts accommodated within the housing part 10 has copper oxide and zinc oxide as main components, and if further containing aluminum oxide and zirconium oxide, due to being able to improve the CO conversion rate, can efficiently generate methanol from the carbon monoxide and hydrogen.

In addition, gallium oxide and indium oxide may be further contained in the Cu-Zn-based catalyst. When these substances are contained in the Cu-Zn-based catalyst, the dispersiveness of copper oxide and zinc oxide improves.

In addition, the Cu-Zn-based catalyst is preferably a particulate matter or a molded matter. The state of the Cu-Zn-based catalyst may be a particulate matter (fine particles, e.g., 10⁻⁹ to 10⁻⁴ m particle size), or may be granules of larger particle size than the particulate matter; however, if the Cu-Zn-based catalyst is a molded matter containing the Cu-Zn-based catalyst, it is possible to further improve the CO conversion rate.

For the molded matter containing Cu-Zn-based catalyst, the content ratio of the Cu-Zn-based catalyst contained in the molded matter is preferably 80% by mass or more, more preferably 90% by mass or more, and even more preferably 95% by mass or more. If the above-mentioned content ratio is 80% by mass or more, it is possible to efficiently synthesize methanol from carbon monoxide and hydrogen. It should be noted that the content ratio of the Cu-Zn-based catalyst contained in the molded matter may be 100% by mass, i.e. the molded matter may be constituted with only the Cu-Zn-based catalyst. In addition, the above content ratio is preferably 98% by mass or less, more preferably 96% by mass or less, and even more preferably 94% by mass or less. If the above content ratio is 98% by mass or less, it is possible to improve the moldability and the mechanical strength of the molded matter, while maintaining efficient synthesis of methanol from carbon monoxide and hydrogen.

The molded matter containing the Cu-Zn-based catalyst may contain various additives that improve the moldability and/or mechanical strength in addition to the Cu-Zn-based catalyst. As the various additives, for example, molding binders such as graphite and carbon black can be exemplified.

The zeolite of the plurality of zeolite catalyst accommodated within the housing part 10 has high water resistance due to having a zeolite skeleton, and thus can suppress deterioration from water produced as a byproduct by the Cu-Zn-based catalyst. For this reason, the zeolite catalyst containing zeolite is superior in long-term stability, and has a long service life.

In addition, regarding the noble metal supported on the zeolite catalyst, since it is possible to convert the intermediates such as methanol and dimethyl ether into liquefied petroleum gas efficiently due to Pt being supported, it is possible to increase the yield of liquefied petroleum gas.

As the noble metal supported on the zeolite (zeolite catalyst), it is preferably a platinum group metal such as Pt, Pd, Rh or Ru. The noble metal may be a single type, or may be two or more types. In the case of the noble metal being two or more types, the state of the noble metal supported on the zeolite is not particularly limited and, for example, each of the noble metals may be mixed as metal simple substances, the noble metals may be alloyed, or a metal simple substance and the alloy may be mixed.

The noble metal supported on the zeolite may be only Pt, may be only Pd, or may contain Pt and Pd. Thereamong, from the viewpoint of efficiently reacting the methanol, the noble metal supported on the zeolite is preferably Pt and Pd, and is more preferably only Pt. Regarding the state of Pt and Pd supported on the zeolite, Pt as a metal simple substance and Pd as a metal simple substance may be mixed, Pt and Pd may be alloyed, a metal simple substance of at least one of Pt and Pd and the alloy of Pt and Pd may be mixed.

In addition, the zeolite constituting the zeolite catalyst preferably contains P (phosphorus). In other words, the zeolite catalyst preferably contains P. If the zeolite contains P, as shown in Equation (1) below, P is expected to bond to O (oxygen) bonding with Si and O bonding with Al existing on the surface of the zeolite, and as a result, since the acid points (solid acid points) of the zeolite increase, and change to weak acid points, it is possible to increase the yield of liquefied petroleum gas.

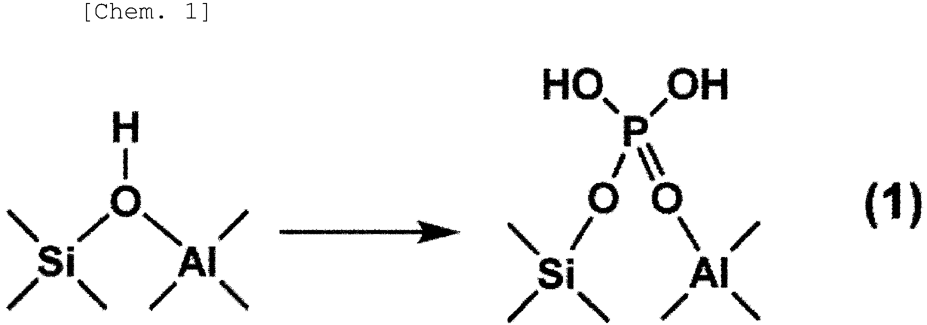

Regarding the mass of P contained in the zeolite catalyst, the lower limit value relative to the mass of zeolite catalyst preferable exceeds 0% by mass, is more preferably 0.5% by mass or more, and even more preferably 1.0% by mass or more, and the upper limit value is preferably less than 5.0% by mass, more preferably 4.0% by mass or less, and even more preferably 3.0% by mass or less.

If the above mass of P exceeds 0% by mass relative to the mass of zeolite catalyst, it is possible to increase the yield of liquefied petroleum gas. In addition, if the above mass of P is less than 5.0% by mass relative to the mass of zeolite catalyst, for the zeolite having a porous structure, since it is possible to suppress a decline in surface area of zeolite caused by an increase in content of P, the liquefied petroleum gas can be efficiently produced.

In addition, the zeolite catalyst is preferably a particulate matter or a molded matter. The state of the zeolite catalyst may be a particulate matter (fine particles, e.g., 10⁻⁹ to 10⁻⁴ m particle size), or may be granules of larger particle size than the particulate matter; however, if the zeolite catalyst is a molded matter containing the zeolite catalyst, it is possible to further improve the yield of liquefied petroleum gas.

In addition, various known zeolites can be used as the zeolite constituting the zeolite catalyst; however, it is preferably an MFI-type zeolite. If the zeolite constituting the zeolite catalyst is an MFI-type zeolite, it is possible to further improve the yield of liquefied petroleum gas.

Regarding the molded matter containing zeolite catalyst, the content ratio of the zeolite catalyst contained in the molded matter is preferably 70% by mass or more, more preferably 80% by mass or more, and even more preferably 90% by mass or more. If the above-mentioned content ratio is 70% by mass or more, it is possible to efficiently synthesize the liquefied petroleum gas from methanol. It should be noted that the content ratio of the zeolite catalyst contained in the molded matter may be 100% by mass, i.e. the molded matter may be constituted with only the zeolite catalyst. In addition, the above-mentioned content ratio is preferably 98% by mass or less, more preferably 96% by mass or less, and even more preferably 94% by mass or less. If the above content ratio is 98% by mass or less, it is possible to improve the moldability and the mechanical strength of the molded matter, while maintaining efficient synthesis of liquefied petroleum gas from methanol.

The molded matter containing the zeolite catalyst may contain various additives that improve the moldability and/or mechanical strength in addition to the zeolite catalyst. As the various additives, for example, a molding binder such as various clay binders, alumina-based binders, and silica-based binders can be exemplified. As the various clay binders, it is preferably a such as a kaolin, bentonite, talc, pyrophyllite, molysite, vermiculite, montmorillonite, chlorite or halloysite-based clay. Due to efficiently improving the catalytic activity of the zeolite catalyst, and suppressing the formation of catalyst poisoning material such as coke, the molding binder is preferably a silica-based binder.

In the case of the Cu-Zn-based catalyst and the zeolite catalyst being molded matters, the shape of these molded matters are not particularly limited and, for example, a desired shape such as columnar, clover shaped, ring-shaped, spherical and porous form can be selected. In the case of a columnar or clover-shaped molded matter, it is preferably an extruded molded matter.

Regarding the particle size of the molded matter containing the Cu-Zn-based catalyst and the molded matter containing the zeolite catalyst, the lower limit value is preferably 200 µm or more, and more preferably 300 µm or more, and the upper limit value is preferably 10 mm or less, more preferably 5 mm or less, and even more preferably 3 mm or less. If the above-mentioned particle size is 200 µm or more, it is possible to prevent pressure loss in the reactor. In addition, if the above-mentioned particle size is 10 mm or less, it is possible to raise the contact efficiency of these catalysts and the reaction materials.

In addition, in the internal space of the housing part 10, the upstream region 11 communicating with the fluid flow inlet 20 is a space occupying at least 30% by volume, preferably 50% by volume or more, more preferably 70% by volume or more, and even more preferably 80% by volume or more of the internal space of the housing part 10, from the most upstream which is a connection part between the housing part 10 and the fluid flow inlet 20, to a most downstream which is a connection part between the housing part 10 and the fluid flow outlet 30, and the upper limit thereof is preferably less than 100% by volume, more preferably 95% by volume or less, and even more preferably 90% by volume or less. In addition, the downstream region 12 communicating with the fluid flow outlet 30 is a space occupying at least 1% by volume, preferably 2% by volume or more, and more preferably 5% by volume or more of the internal space of the housing part 10, from the most downstream to the most upstream inside of the above-mentioned housing part 10, and the upper limit thereof is preferably less than 100% by volume, more preferably 30% by volume or less, even more preferably 20% by volume or less, and particularly preferably 15% by volume or less.

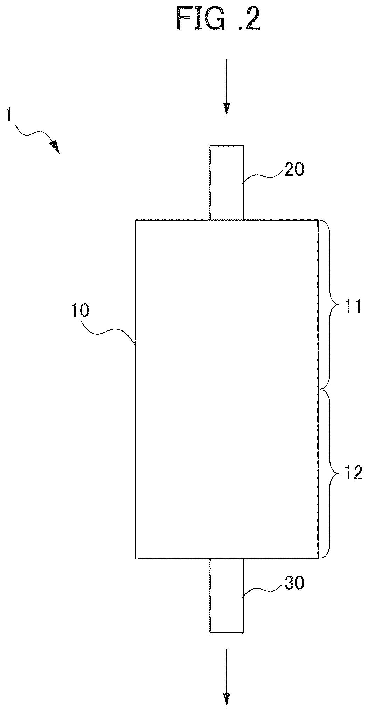

For example, as shown in FIG. 1, in the internal space of the housing part 10, the region (hereinafter also referred to as intermediate region) 13 may exist between the upstream region 11 and the downstream region 12, and as shown in FIG. 2, the upstream region 11 and the downstream region 12 may be adjacent without the region (intermediate region) 13 existing between the upstream region 11 and the downstream region 12. In addition, as shown in FIG. 1, in the case of the intermediate region 13 existing between the upstream region 11 and the downstream region 12, the weight ratio of the Cu-Zn-based catalyst and the zeolite catalyst in the intermediate region 13 can be appropriately set according to the desired content ratio, etc. of liquefied petroleum gas produced by the reactor 1.

In addition, a transmission part (not shown) which can transmit fluid flowing within the housing part 10 may be provided within the housing part 10, specifically at least one of within the upstream region 11, within the downstream region 12, within the intermediate region 13 in the case of the intermediate region 13 existing inside of the housing part 10, and the boundaries of these regions. The transmission part may be a rigid body, may be a plastic body, or may be an elastic body. The transmission part can stably and easily arrange the Cu-Zn-based catalyst and the zeolite catalyst in a predetermined portion inside the housing part 10. The transmission part is preferably a mesh, a silica wool, or a grid (gap). In addition, from the uppermost part to the lowermost part in the reactor in which the catalyst is filled is defined as the housing part 10.

So long as the transmission part prevents the catalyst in the upstream region 11 and the catalyst in the downstream region 12 from mixing, and does not hinder the gas generated in the upstream region 11 from reaching the downstream region 12, the transmission part may be arranged anywhere. As an example of hindering the gas generated in the upstream region 11 from reaching the downstream region 12, the flowrate of gas being restricted upon the gas generated in the upstream region 11 flowing through to the downstream region 12 can be exemplified.

In addition, inside of the housing part 10, it is preferable for a mechanism hindering the flow of gas not to exist between the upstream region 11 and the downstream region 12. As such mechanism hindering the flow of gas, a small flow channel part such as a pipe or pathway of smaller flow channel cross sectional area than the housing part 10, a regulating valve that regulates flowrate, a transmission part through which the flowrate is severely hindered, or the like can be exemplified.

In addition, the housing part 10 may be a rigid body, may be a plastic body, or may be an elastic body, and can be appropriately selected according to the design of the reactor 1.

Such a reactor 1 accommodates the Cu-Zn-based catalyst and the zeolite catalyst within one housing part 10, and the Cu-Zn-based catalyst and the zeolite catalyst exist in close proximity of each other. For this reason, compared to a reactor (separation-type reactor) including a Cu-Zn-based catalyst tank accommodating the Cu-Zn-based catalyst and a zeolite catalyst tank accommodating the zeolite catalyst, connecting the Cu-Zn-based catalyst tank and the zeolite catalyst tank by piping, and supplying methanol generated in the Cu-Zn-based catalyst tank to the zeolite catalyst tank by the piping, the reactor 1 can produce liquefied petroleum gas efficiently from carbon monoxide and hydrogen. In particular, compared to the product material flowing out from the zeolite catalyst tank in the separation-type reactor, the reactor 1 can decrease the dimethyl ether amount in the product material flowing out form the fluid flow outlet 30.

Next, an example of the production method of liquefied petroleum gas by the liquefied petroleum gas production reactor 1 will be described.

In the case of the Cu-Zn-based catalyst and the zeolite catalyst in the reactor 1 not being a reduced state, reduction treatment is performed on the Cu-Zn-based catalyst and the zeolite catalyst. Preferably, the Cu-Zn-based catalyst and the zeolite catalyst are subject to reduction treatment with hydrogen.

Next, the raw material is supplied to the reactor 1. From the fluid flow inlet 20 of the reactor 1, the carbon monoxide and hydrogen which are the raw material is supplied into the housing part 10 accommodating the Cu-Zn-based catalyst and the zeolite catalyst in the reduced state. The carbon monoxide and hydrogen are gasses. Regarding the supply method of the raw material, the carbon monoxide and hydrogen may be supplied simultaneously, the carbon monoxide and hydrogen may be supplied separately, or a mixed gas containing carbon monoxide and hydrogen such as syngas may be supplied. In addition, the raw material may be continuously supplied, or may be intermittently supplied.

The carbon monoxide and hydrogen supplied into the housing part 10 are converted to methanol by the Cu-Zn-based catalyst, and the methanol is converted to liquefied petroleum gas by the zeolite catalyst. The liquefied petroleum gas is flowed to outside of the reactor 1 from the fluid flow outlet 30. By configuring in this way, the reactor 1 can produce the liquefied petroleum gas from carbon monoxide and hydrogen.

In addition, regarding the gas space velocity (GHSV) of carbon monoxide and hydrogen within the housing part 10, the lower limit value is preferably 500/h or more, more preferably 1000/h or more, and even more preferably 1500/h or more, and the upper limit value is preferably 20000/h or less, more preferably 10000/h or less, and even more preferably 5000/h or less.

If the above-mentioned gas space velocity (GHSV) is 500/h or more, it is possible to produce liquefied petroleum gas from carbon monoxide and hydrogen efficiently. In addition, if the above-mentioned gas space velocity (GHSV) is 20000/h or less, it is possible to lower the content ratio of unreacted substance (raw material), intermediates, byproducts, etc. in the product material flowing out from the fluid flow outlet 30.

In addition, regarding the temperature inside the housing part 10 (temperature of the Cu-Zn-based catalyst and the zeolite catalyst), the lower limit value is preferably 260°C or higher, more preferably 270°C or higher, and even more preferably 280°C or higher, and the upper limit value is preferably 330°C or lower, more preferably 325°C or lower, and even more preferably 320°C or lower.

If the temperature inside the housing part 10 is 260°C or higher, it is possible to produce liquefied petroleum gas from carbon monoxide and hydrogen efficiently. In addition, if the temperature inside the housing part 10 is 330°C or lower, it is possible to suppress catalytic activity degradation of the Cu-Zn-based catalyst and the zeolite catalyst relative to the temperature.

In addition, regarding the pressure inside the housing part 10, the lower limit value is preferably 2.0 MPa or more, more preferably 3.0 MPa or more, and even more preferably 3.5 MPa or more, and the upper limit value is preferably 6.0 MPa or less, more preferably 5.5 MPa or less, and even more preferably 5.0 MPa or less.

If the pressure inside the housing part 10 is 2.0 MPa or more, it is possible to produce liquefied petroleum gas from carbon monoxide and hydrogen efficiently. In addition, if the pressure inside the housing part 10 is 6.0 MPa or less, it is possible to suppress catalytic activity degradation.

In addition, as a method of containing P in the zeolite constituting the zeolite catalyst, it is preferably an impregnation method or an immersion method due to being able to easily contain P in the zeolite, and being able to easily control the content of P.

As the starting material of P upon containing P into the zeolite, it is preferably orthophosphoric acid or phosphate ester. For example, a solution containing the starting material is used in the impregnation method or the immersion method.

In the impregnation method, it is possible to easily contain P in the zeolite by impregnating an orthophosphoric acid solution or a phosphate ester solution (hereinafter also referred to as phosphoric acid solution) into the zeolite, followed by calcining the zeolite after impregnated. In the immersion method, it is possible to easily contain P in the zeolite by immersing the zeolite in the phosphoric acid solution, followed by calcining the zeolite after immersion.

Due to the phosphoric acid solution penetrating the zeolite sufficiently, the impregnation time or the immersion time of the phosphoric acid solution is preferably 10 minutes or more and 5 hours or less.

The concentration of the phosphoric acid solution is preferably 2% by mass or more and 20% by mass or less.

The calcining temperature of the zeolite is preferably 300°C or higher and 600°C or lower. The calcining time of the zeolite is preferably 30 minutes or more and 300 minutes or less.

By adjusting the impregnation time or the immersion time of the phosphoric acid solution, and adjusting the concentration of the phosphoric acid solution, it is possible to easily control the amount of P in the zeolite.

Next, a liquefied petroleum gas production reaction device according to an embodiment will be described.

The liquefied petroleum gas production reaction device includes the above-mentioned liquefied petroleum gas production reactor 1. In addition, the liquefied petroleum gas production reaction device may further include a heater that heats the reactor 1. The heater heats the housing part 10 of the reactor 1. For example, the heater is electric or burner type.

In addition, the liquefied petroleum gas production reaction device may further include a cooler. The cooler cools a portion of the housing part 10 for which the temperature partially reached high temperature, such as a portion on the downstream side of the housing part 10.

Such a liquefied petroleum gas production reaction device, as described above, produces liquefied petroleum gas by supplying carbon monoxide and hydrogen, which are the raw material, to the inside of the housing accommodating the Cu-Zn-based catalyst and the zeolite catalyst in the reduced state from the fluid flow inlet of the housing part, and reacting the carbon monoxide and hydrogen by the Cu-Zn-based catalyst and the zeolite catalyst.

According to the above described embodiment, by accommodating the Cu-Zn-based catalyst and the zeolite catalyst for producing liquefied petroleum gas in the same housing part of the reactor, and setting the weight ratio of the Cu-Zn-based catalyst and the zeolite catalyst in a predetermined region within the housing part to a predetermined range, it is possible to improve the CO conversion rate and the yield of liquefied petroleum gas, and to decrease the generated amount of dimethyl ether which is a byproduct. In particular, compared to a separation-type reactor which includes a Cu-Zn-based catalyst tank accommodating the Cu-Zn-based catalyst and a zeolite catalyst tank accommodating the zeolite catalyst, the reactor of the embodiment can decrease the dimethyl ether amount in the product material discharged from the fluid flow outlet.

Although embodiments have been described above, the present invention is not to be limited to the above-described embodiments, and can encompass any form included in the gist and claims of the present disclosure, and can be modified in various ways within the scope of the present disclosure.

### EXAMPLES

Next, Examples and Comparative Examples will be described; however, the present disclosure is not to be limited to these Examples.

### <Example 1>

### (Cu-Zn-based catalyst)

A solution A was prepared by dissolving 9.513 g of copper nitrate trihydrate, 4.973 g of zinc nitrate hexahydrate, 1.896 g of aluminum nitrate nonahydrate, and 0.542 g of zirconium nitrate dihydrate in 58.4 g of distilled water. In addition, a solution B was prepared by dissolving 14.8 g of anhydrous sodium carbonate in 200 g of distilled water.

To a 500-ml separable flask equipped with a stirrer, 50 g of distilled water was poured, and was heated in a hot water bath so that that water temperature reached 65°C.

Next, the whole amount of the solution A and 90 ml of the solution B were added dropwise to the above-mentioned separable flask by setting the speed of the liquid feed pump so that the dropwise addition completed for 70 minutes. While adding dropwise, the mixture was stirred vigorously with the stirrer. In addition, adjustment was performed in the hot water bath as needed at any time so the precipitation slurry temperature became 65°C. The pH after completing dropwise addition of the solution A and the solution B was roughly 5.6. Next, the remainder of the solution B was gradually added dropwise so that the pH became 6.5. After the pH reached 6.5, the precipitate slurry was vigorously stirred for 2 hours at 65°C. The pH after 2 hours was roughly 7.2.

Subsequently, the precipitate slurry was transferred to a suction filter device and filtered to obtain the precipitate cake. By washing the obtained precipitate cake 20 times with 25 ml of distilled water, Na ions were removed from the precipitate cake.

After washing, the precipitate cake was transferred to an evaporating dish, and dried at 120°C for 12 hours in a drying oven. Next, the temperature was raised to 350°C at a rate of 10°C/min in a calcination furnace, and after calcining at 350°C for 2 hours, the obtained calcined product was sufficiently ground in an agate mortar to obtain a powder.

This powder was made into pellets with 20 mm diameter and about 1 mm thickness under the condition of 5 MPa pressure by a tablet press, and after pulverizing this pellets by a mortar, the pulverized sample was sifted using 300 µm mesh and 500 µm mesh which are stacked each other. A molded matter consisting of the Cu-Zn-based catalyst with grain form, a particle size of 300 to 500 µm, and a bulk density of 0.9 g/cm³ was thereby obtained.

As a result of measuring by ICP-OES, this Cu-Zn-based catalyst consisted of copper oxide (CuO), zinc oxide (ZnO), zirconium oxide (ZrO₂) and aluminum oxide (Al₂O₃), and the chemical composition was 62.6% by mass of copper oxide, 27.2% by mass of zinc oxide, 4.9% by mass of zirconium oxide and 5.3% by mass of aluminum oxide.

### (Zeolite Catalyst)

To an agate mortar, 36 g of the MFI-type zeolite (ZSM-5, mole number of SiO₂ / mole number of Al₂O₃ = 40) was charged, and this was impregnated for about 1 hour by mixing so as to become uniform with a pestle while adding dropwise with a pipette an aqueous solution prepared by dissolving 2.3241 g of orthophosphoric acid in 21.6 g of distilled water. Subsequently, it was dried for 10 hours at 100°C, and raised in temperature from room temperature to 500°C in 50 minutes under an air atmosphere, then calcined for 120 minutes at the same temperature to obtain an MFI-type zeolite containing P.

To an agate mortar, 30 g of the MFI-type zeolite containing P was charged, and this was impregnated for about 1 hour by mixing so as to become uniform with a pestle while adding dropwise with pipette an aqueous solution prepared by dissolving 0.4002 g of chloroplatinic acid hexahydrate in 22.7274 g of 10% hydrochloric acid, followed by drying for 10 hours at 100°C, and raising the temperature from room temperature to 500°C in 50 minutes under an air atmosphere, and calcining at the same temperature for 120 minutes, thereby obtaining an MFI-type zeolite containing P and supporting Pt. Next, this zeolite was made into pellets with 20 mm diameter and about 1 mm thickness by a tablet press, and after pulverizing this pellets by a mortar, the pulverized sample was sifted using 300 µm mesh and 500 µm mesh which are stacked each other. A molded matter consisting of the MFI-type zeolite containing P and supporting Pt (zeolite catalyst) with grain form, a particle size of 300 to 500 µm, and a bulk density of 0.8 g/cm³ was thereby obtained.

As a result of measuring by ICP-OES, the chemical composition of this zeolite catalyst was 0.5% by mass of platinum, 1.9% by mass of phosphorus, and the remainder of ZSM-5.

Next, the above-mentioned Cu-Zn-based catalyst was filled into the upstream region of the housing part so that (wt1/(wt1+wt2)) became 1. In other words, in the upstream region, only the Cu-Zn-based catalyst was filled.

The above-mentioned zeolite catalyst was filled into the downstream region of the housing part so that (wb1/(wb1+wb2)) became 0. In other words, only the zeolite catalyst was filled in the downstream region.

Relative to the internal space of the housing part, the upstream region of the housing part was 78% by volume, and the downstream region was 22% by volume.

### <Example 2>

The same Cu-Zn-based catalyst and zeolite catalyst were used as Example 1.

The above-mentioned Cu-Zn-based catalyst and zeolite catalyst were filled into the upstream region of the housing part so that (wt1/(wt1+wt2)) became 0.80.

The above-mentioned zeolite catalyst was filled into the downstream region of the housing part so that (wb1/(wb1+wb2)) became 0.

Relative to the internal space of the housing part, the upstream region of the housing part was 90% by volume, and the downstream region was 10% by volume.

### <Example 3>

The same Cu-Zn-based catalyst and zeolite catalyst were used as Example 1.

The above-mentioned Cu-Zn-based catalyst and zeolite catalyst were filled into the upstream region of the housing part so that (wt1/(wt1+wt2)) became 0.80.

The above-mentioned zeolite catalyst was filled into the downstream region of the housing part so that (wb1/(wb1+wb2)) became 0.

Relative to the internal space of the housing part, the upstream region of the housing part was 97% by volume, and the downstream region was 3% by volume.

### <Comparative Example 1>

### (Cu-Zn-based catalyst)

As the Cu-Zn-based catalytic material, a ternary oxide of copper oxide, zinc oxide and aluminum oxide (tradename: 45776 Copper based methanol synthesis catalyst, manufactured by Alfa Aesar) was used. This Cu-Zn-based catalytic material was made into pellets with 20 mm diameter and about 1 mm thickness under the condition of 5 MPa pressure by a tablet press, and after pulverizing this pellets by a mortar, the pulverized sample was sifted using 300 µm mesh and 500 µm mesh which are stacked each other. A molded matter consisting of the Cu-Zn-based catalyst with grain form, a particle size of 300 to 500 µm, and a bulk density of 0.9 g/cm³ was thereby obtained.

As a result of measuring by ICP-OES, this Cu-Zn-based catalyst consisted of copper oxide (CuO), zinc oxide (ZnO), magnesium oxide (MgO) and aluminum oxide (Al₂O₃), and the chemical composition was 63.5% by mass of copper oxide, 25.0% by mass of zinc oxide, 1.5% by mass of magnesium oxide and 10.0% by mass of aluminum oxide.

### (Zeolite Catalyst)

In Comparative Example 1, a beta zeolite catalyst supporting a noble metal was used instead of the MFI-type zeolite supporting noble metal of Examples 1 to 3. The preparation sequence of the beta zeolite catalyst supporting a noble metal is shown below. To an agate mortar, 30 g of the beta zeolite (BEA, mole number of SiO₂ / mole number of Al₂O₃ = 41) was charged, and this was impregnated for about 1 hour by mixing so as to become uniform with a pestle while adding dropwise with a pipette an aqueous solution prepared by dissolving 0.2512 g of palladium chloride in 22.7274 g of 10% hydrochloric acid, followed by drying for 10 hours at 100°C, and raising the temperature from room temperature to 500°C in 50 minutes under an air atmosphere, and calcining at the same temperature for 120 minutes, thereby obtaining a beta zeolite supporting Pd. Next, the beta zeolite supporting Pd was made into pellets with 20 mm diameter and about 1 mm thickness by a tablet press, and after pulverizing this pellets by a mortar, the pulverized sample was sifted using 300 µm mesh and 500 µm mesh which are stacked each other. A molded matter consisting of the beta zeolite catalyst supporting Pd (zeolite catalyst) with grain form, a particle size of 300 to 500 µm, and a bulk density of 0.8 g/cm³ was thereby obtained.

As a result of measuring by ICP-OES, the chemical composition of this beta zeolite catalyst was 0.5% by mass of palladium and the remainder was BEA.

Next, the above-mentioned Cu-Zn-based catalyst and zeolite catalyst were filled into the upstream region of the housing part so that (wt1/(wt1+wt2)) became 0.50.

The above-mentioned Cu-Zn-based catalyst and zeolite catalyst were filled into the downstream region of the housing part so that (wb1/(wb1+wb2)) became 0.50.

In other words, in Comparative Example 1, since the Cu-Zn-based catalyst and the zeolite catalyst were uniformly filled in the housing part, (wt1/(wt1+wt2)) and (wb1/(wb1+wb2)) were the same.

### <Comparative Example 2>

The same Cu-Zn-based catalyst and zeolite catalyst were used as Example 1.

The above-mentioned Cu-Zn-based catalyst and zeolite catalyst were filled into the upstream region of the housing part so that (wt1/(wt1+wt2)) became 0.80.

The above-mentioned Cu-Zn-based catalyst and zeolite catalyst were filled into the downstream region of the housing part so that (wb1/(wb1+wb2)) became 0.80.

In other words, in Comparative Example 2, since the Cu-Zn-based catalyst and the zeolite catalyst were uniformly filled in the housing part, (wt1/(wt1+wt2)) and (wb1/(wb1+wb2)) were the same.

### <Comparative Example 3>

The same Cu-Zn-based catalyst and zeolite catalyst were used as Example 1.

Two housings of the same size were prepared, and these two housings were connected by a pipe. The flow channel cross-sectional area of the pipe was smaller than the flow channel cross-sectional area of the housings. Only the Cu-Zn-based catalyst was filled into the housing on the upstream. Only the zeolite catalyst was filled into the housing on the downstream. According to such a configuration, the gas generated within the housing on the upstream passed through the pipe to enter the housing on the downstream, and LPG was generated in the housing on the downstream.

In other words, in Comparative Example 3, two housings were prepared, and each catalyst was filled so that (wt1/(wt1+wt2)) became 1 in the housing on the upstream, and so that (wb1/(wb1+wb2)) became 0 in the housing on the downstream.

The filling amount of the zeolite catalyst in the housing on the downstream relative to the filling amount of the Cu-Zn-based catalyst in the housing on the upstream was 0.25.

### (Production of Liquified Petroleum Gas)

The liquefied petroleum gas was produced at the following conditions using the above-mentioned reactor including the housing part.

As the housing part, a fixed bed high-pressure flow type housing was adopted, and was made of stainless steel (inside diameter 6.2 mm, total length 60 cm). The housing part was placed in an electric furnace, the temperature of the electric furnace was measured with a thermocouple inserted in the central part of the furnace, and controlled by PID. The temperature inside the housing part 10 (temperature of the Cu-Zn-based catalyst and the zeolite catalyst) was measured with a thermocouple inserted in the center inside of the housing part 10. It should be noted that the temperature inside of the housing part 10 is the synthesis temperature.

By supplying H₂ into the housing for 2 hours at a flowrate of 40 ml/min and 380°C, the reducing treatment of the Cu-Zn-based catalyst and the zeolite catalyst inside the housing was performed.

Next, mixed gas (CO:H₂ = 1:2 (mole ratio)) of carbon monoxide and hydrogen was supplied to the housing part from the fluid flow inlet of the reactor. By controlling the temperature (synthesis temperature) and the pressure inside the housing part, while supplying the carbon monoxide and hydrogen to the housing part, liquefied petroleum gas was synthesized from the carbon monoxide and hydrogen. More specifically, Examples 1 and 2, and Comparative Examples 1 and 2 conducted the synthesis of liquefied petroleum gas at the reaction conditions of GHSV (gas space velocity) 750 h⁻¹, 5 MPa pressure, and 320°C reaction temperature. Example 3 conducted the synthesis of liquefied petroleum gas at the reaction conditions of GHSV (gas space velocity) 750 h⁻¹, 5 MPa pressure, and 310°C reaction temperature. In addition, Comparative Example 3 conducted the synthesis of liquefied petroleum gas at the reaction conditions of GHSV (gas space velocity) 1073 h⁻¹ (converted to starting materials), 5 MPa pressure, and 320°C reaction temperature in the housing on the upstream, and GHSV (gas space velocity) 2480 h⁻¹ (converted to starting materials), 5 MPa pressure, and 320°C reaction temperature in the housing on the downstream.

### (Analysis of Gas Composition)

At the moment 6 hours elapsed from synthesis start, compositional analysis of the generated gas was performed using a gas chromatograph connected online. The employed gas chromatograph used a GC-2014 (manufactured by Shimadzu Corp.). The analysis conditions and analysis targets are noted below.

### <Analysis Conditions>

Column: RT-Q-BOND
Temperature rising program: (i) 45°C (30 min hold) (ii) temperature rising to 175°C at 2°C/min
   (iii) 175°C (40 min hold)
Analysis time: 135 min

### <CO Conversion Rate>

CO conversion rate (%) = [(CO flowrate (µmol/min) of fluid flow inlet - CO flowrate (µmol/min) of fluid flow outlet)/CO flowrate (µmol/min) of fluid flow inlet] × 100

CO conversion rate indicates the proportion of the carbon monoxide (CO) in the reaction material gas converted to hydrocarbons, etc.

### <Yield of Propane>

Yield of propane (Cmol%) = [(C3 generation rate × 3)/ (CO flowrate of fluid flow inlet) × 106/22400] × 100

The unit of the C3 generation rate is C µmol/min, and the unit of the CO flowrate of the fluid flow inlet is ml (Normal)/min. C3 is propane.

### <Yield of Butane>

Yield of butane (Cmol%) = [(C4 generation rate × 4)/(CO flowrate of fluid flow inlet) × 106/22400] × 100

The unit of the C4 generation rate is C µmol/min, and the unit of the CO flowrate of the fluid flow inlet is mml (Normal)/min. C4 is butane.

### <Total yield of propane and butane>

Total yield of propane and butane (Cmol%) = yield of propane (Cmol%) + yield of butane (Cmol%)

### <Yield of DME>

Yield of DME (Cmol%) = [(DME generation rate × 2)/(CO flowrate of fluid flow inlet) × 106/22400] × 100

The unit of the DME generation rate is C µmol/min, and the unit of the CO flowrate of the fluid flow inlet is mml (Normal)/min. DME is dimethyl ether.

**[Table 1]**

| | Example 1 | Example 2 | Example 3 | Comparative Example 1 | Comparative Example 2 | Comparative Example 3 |
|---|---|---|---|---|---|---|
| CO conversion rate (%) | 94.0 | 95. 3 | 93. 7 | 90. 2 | 92.4 | 59. 6 |
| Total yield of propane and butane (C-mol%) | 35. 2 | 36. 2 | 33. 3 | 31.6 | 32.4 | 13. 6 |
| Yield of propane (C-mol%) | 27. 1 | 27. 3 | 25. 6 | 9. 9 | 25. 3 | 6.9 |
| Yield of butane (C-mol%) | 8.1 | 8. 9 | 7. 7 | 21.3 | 7.1 | 6. 7 |
| Yield of DME (C-mol%) | 2.2 | 0 | 0.6 | 6. 5 | 4. 0 | 0 |

As shown in Table 1, Examples 1 to 3 having the first weight ratio (wt1/(wt1+wt2)) in the upstream region of the housing part differing from the second weight ratio (wb1/(wb1+wb2)) in the downstream region could achieve an increase in the CO conversion rate and decrease in the generated amount of dimethyl ether, and further could increase the yield of liquefied petroleum gas, compared to Comparative Examples 1 and 2 in which the first weight ratio and the second weight ratio are the same, and Comparative Example 3 in which the housing on the upstream filled with only the Cu-Zn-based catalyst and the housing on the downstream filled with only the zeolite catalyst are connected by a pipe. In addition, in the above-mentioned Examples, the yield of propane became high compared to the yield of butane.

### EXPLANATION OF REFERENCE NUMERALS

1 liquefied petroleum gas production reactor
10 housing part
11 upstream region
12 downstream region
13 region (intermediate region)
20 fluid flow inlet
30 fluid flow outlet

## Claims

1. A liquefied petroleum gas production reactor comprising a housing part that accommodates a Cu-Zn-based catalyst and a zeolite catalyst supporting a noble metal,
wherein a ratio (wt1/(wt1+wt2)) of a weight of the Cu-Zn-based catalyst relative to a total weight of the weight (wt1) of the Cu-Zn-based catalyst and a weight (wt2) of the zeolite catalyst in an upstream region of the housing part differs from a ratio (wb1/(wb1+wb2)) of a weight of the Cu-Zn-based catalyst relative to a total weight of the weight (wb1) of the Cu-Zn-based catalyst and a weight (wb2) of the zeolite catalyst in a downstream region of the housing part.

2. The liquefied petroleum gas production reactor according to claim 1, wherein the ratio (wt1/(wt1+wt2)) is greater than the ratio (wb1/(wb1+wb2)).

3. The liquefied petroleum gas production reactor according to claim 1, wherein the ratio (wt1/(wt1+wt2)) is 0.30 or more.

4. The liquefied petroleum gas production reactor according to claim 1, wherein the ratio (wb1/(wb1+wb2)) is less than 0.70.

5. The liquefied petroleum gas production reactor according to claim 1, wherein a total filling rate of the Cu-Zn-based catalyst and the zeolite catalyst accommodated in the housing part is 20% by mass or more.

6. The liquefied petroleum gas production reactor according to claim 1, wherein the zeolite catalyst contains P.

7. A liquefied petroleum gas production reaction device comprising the liquefied petroleum gas production reactor according to any one of claims 1 to 6.
